# FASCICULE DE BREVET EUROPEEN

(11) **EP 2 930 162 B1**
(45) Date de publication et mention de la délivrance du brevet: **21.12.2016**
(21) Numéro de dépôt: 15248016.6
(22) Date de dépôt: 03.04.2015
(51) Int. Cl.: C04B 41/85, C04B 41/89, F16D 69/02

(54) **PROTECTION CONTRE L'OXYDATION DE PIÈCES EN MATÉRIAU COMPOSITE CONTENANT DU CARBONE**
SCHUTZ GEGEN OXIDATION VON KOHLENSTOFFHALTIGEN WERKSTÜCKEN AUS VERBUNDMATERIAL
Protecting parts made of carbon-containing composite material from oxidation

(30) Priorité: 10.04.2014 FR 1453198
(43) Date de publication de la demande: 14.10.2015
(73) Titulaire: Safran Landing Systems, 78140 Vélizy-Villacoublay (FR)
(72) Inventeur: Nicolaus, Nathalie, 69008 LYON (FR); Fontarnous, Véronique, 69330 MEYZIEU (FR); Roussarie, Nadia, 69960 CORBAS (FR); Sniezewski, Julien, 69420 LES HAIES (FR)
(74) Mandataire: Laïk, Eric

(56) Documents cités:
- FR-A1- 2 893 939

## Description

### Arrière-plan de l'invention

L'invention concerne la protection contre l'oxydation de pièces en matériau composite contenant du carbone, c'est-à-dire en un matériau comprenant un renfort fibreux densifié par une matrice et dans lequel le renfort fibreux et/ou la matrice et/ou un revêtement d'interphase entre fibres du renfort et matrice est en carbone. Un domaine particulier d'application de l'invention est la protection contre l'oxydation de pièces en matériau composite carbone/carbone (C/C), notamment de disques de freins en composite C/C, et en particulier de disques de freins d'aéronefs, par exemple d'avions, ou de disques de freins de véhicules terrestres.

En milieu oxydant, la capacité de telles pièces à conserver de bonnes propriétés mécaniques à des températures élevées est conditionnée par la présence d'une protection efficace contre l'oxydation du carbone. En effet, après son élaboration, le matériau composite présente habituellement une porosité interne résiduelle qui offre au milieu ambiant un accès jusqu'au coeur du matériau.

En outre, dans certaines applications, la protection contre l'oxydation doit conserver son efficacité en présence d'humidité et/ou de catalyseurs d'oxydation du carbone. Il en est ainsi en particulier pour les disques de freins d'avions en composite C/C qui peuvent être exposés à de l'humidité présente sur les pistes et se trouver en contact avec des catalyseurs d'oxydation du carbone apportés par exemple par des acétates ou formiates de potassium présents dans des produits déverglaçants couramment utilisés sur les pistes.

Le document US 2008/311301 décrit un procédé pour la protection contre l'oxydation de pièces en matériau poreux contenant du carbone, notamment de disques de frein en matériau composite C/C, qui consiste à appliquer une composition en milieu aqueux comprenant : un phosphate métallique en solution aqueuse tel que l'hydrogéno-phosphate d'aluminium, ou phosphate mono-aluminique Al(H₂PO₄)₃ (« MALP » : « Mono-Aluminium-Phosphate »), une poudre de bore ou de composé du bore, tel que B₂O₃, de la poudre de titane et un élément M alcalin ou alcalino-terreux catalyseur de l'oxydation du carbone pour former en présence d'oxygène une association P-O-Ti-M liée par de l'oxyde de bore B₂O₃ et piégeant l'élément M. Un traitement thermique final est réalisé à environ 350°C sous air et, éventuellement, à environ 700°C sous atmosphère non oxydante (N₂). Une telle composition est efficace vis-à-vis de l'oxydation catalytique du carbone. Toutefois, l'utilisation de poudre de bore en environnement industriel peut nécessiter la mise en place de précautions particulières en raison de sa toxicité. De plus, l'oxyde de bore B₂O₃ présente une sensibilité élevée à l'humidité et se vaporise à des températures inférieures à 900°C. En outre, la composition peut être peu stable et d'un emploi délicat, le bore et B₂O₃ réagissant avec le phosphate mono-aluminique.

Le document US 2007/0026153 décrit également un procédé pour la protection de pièces en matériau composite contenant du carbone, notamment des disques de frein en matériau composite C/C. Dans une première étape du procédé, une protection interne est mise en place par imprégnation par une solution aqueuse de phosphate métallique, tel que du phosphate mono-aluminique, et traitement thermique à environ 700°C sous azote (N₂). Ensuite, est appliquée une composition liquide contenant, en milieu aqueux, de la silice colloïdale SiO₂ une poudre de verre borosilicaté de type « Pyrex® » et de la poudre de diborure de titane TiB₂. En service en milieu oxydant, TiB₂ s'oxyde en formant B₂O₃, assurant la régénération de B₂O₃ et la conservation d'une phase de verre borosilicaté ayant un pouvoir cicatrisant par passage à l'état pâteux à partir de 600°C. Toutefois, la durée de vie de la protection est relativement limitée lors d'expositions répétées à un environnement humide du fait de la disparition de B₂O₃ et de la consommation de TiB₂. En outre, une amélioration de la protection vis-à-vis de l'oxydation catalytique du carbone pourrait être souhaitable en particulier vis-à-vis de déverglaçants de type formiate de potassium lesquels peuvent du fait de leur tension de surface avoir une tendance relativement forte à s'imprégner dans le matériau.

### Objet et résumé de l'invention

L'invention a pour but de fournir un procédé permettant d'améliorer la protection anti-oxydation de pièces en matériau composite contenant du carbone, en environnement humide à haute température ainsi qu'en présence de catalyseurs d'oxydation du carbone, tout en étant de mise en oeuvre aisée notamment pour la fabrication de pièces en grande série. L'invention a aussi pour but de fournir de nouveaux procédés de traitement de pièces en matériau composite contenant du carbone permettant d'obtenir des performances améliorées lorsque ces pièces sont utilisées pour le freinage de véhicules, notamment dans le domaine aéronautique.

Ce but est atteint grâce à un procédé de protection contre l'oxydation d'une pièce en matériau composite comportant du carbone, le procédé comportant les étapes suivantes :
a) application, sur au moins une partie de la surface externe de la pièce, d'une composition de revêtement sous forme de suspension aqueuse comportant :
   - un phosphate métallique,
   - une poudre d'un composé comportant du titane, et
   - une poudre de B₄C, et
b) traitement thermique de la composition de revêtement appliquée lors de l'étape a), une température de traitement comprise entre 330°C et 730°C étant imposée durant le traitement thermique afin d'obtenir sur la surface externe de la pièce un revêtement comportant une première phase dans laquelle le phosphate métallique est sous forme cristalline et une deuxième phase dans laquelle le phosphate métallique est sous forme amorphe.

La détection des phases cristalline et amorphe de phosphate métallique peut être réalisée par spectroscopie RMN (1D et 2D) des noyaux solides tels que ³¹P et ²⁷Al.

L'invention repose, d'une part, sur le choix de nouvelles compositions de revêtement et, d'autre part, sur l'application d'une température particulière une fois la composition de revêtement appliquée. Durant le traitement thermique, une température suffisamment élevée est imposée afin d'obtenir dans le revêtement une association d'au moins une phase de phosphate métallique cristallin et d'au moins une phase de phosphate métallique amorphe. Toutefois, la température imposée durant l'étape b) reste suffisamment faible pour éviter de cristalliser l'intégralité du phosphate métallique et, par conséquent, conserver une phase de phosphate métallique amorphe dans le revêtement formé.

Le phosphate métallique présent dans le revêtement permet à la fois d'assurer une fonction de liant, une fonction de protection vis-à-vis de l'oxydation catalytique du carbone ainsi qu'une fonction d'auto-cicatrisation. Ces propriétés avantageuses découlent de la présence conjointe dans le revêtement du phosphate métallique amorphe et du phosphate métallique cristallin. En effet, le phosphate métallique amorphe assure par sa capacité de nappage à l'état amorphe la fonction d'auto-cicatrisation en comblant les pores et/ou fissures présents à la surface de la pièce aux températures d'utilisation de celle-ci afin d'éviter que des espèces oxydantes ne pénètrent dans ladite pièce (protection contre l'oxydation thermique). La phase amorphe permet aussi d'assurer une bonne cohésion entre le revêtement et la pièce sous-jacente, laquelle peut avoir été protégée au préalable par une couche de protection interne comme il sera détaillé plus bas. Le phosphate métallique cristallin permet quant à lui de conférer une protection contre l'oxydation catalytique du carbone en piégeant les catalyseurs d'oxydation du carbone, ces derniers étant par exemple issus de produits déverglaçants de piste ou de route, de produits détergents ou de produits de dégivrage.

Ainsi, grâce à l'association de phosphate métallique sous forme amorphe et de phosphate métallique sous forme cristalline dans le revêtement formé, la présente invention permet avantageusement de conférer à des substrats carbonés une très bonne protection contre l'oxydation en présence de catalyseurs d'oxydation sur une large plage de température.

En tant que source de bore susceptible de générer B₂O₃, le carbure de bore B₄C est relativement peu onéreux, plus disponible commercialement et d'un emploi plus aisé que le bore B. La présence de B₄C permet en outre d'obtenir un revêtement conférant une meilleure protection contre l'oxydation à haute température par rapport à l'emploi de B ou de ZrB₂ notamment. En outre, contrairement à B et B₂O₃, B₄C réagit très peu avec le phosphate métallique, ce qui permet de conserver une composition de revêtement stable et B₄C présente une cinétique d'oxydation plus faible que celle de B et permet de constituer une source de bore durable en dépit de l'élimination de B₂O₃ en présence d'eau.

Lorsque la composition de revêtement comporte des composés comportant du titane non oxydés, ces derniers peuvent avantageusement être oxydés par l'oxygène du milieu ambiant et, par conséquent, diminuer la quantité d'oxygène disponible pour oxyder le carbone. Une fois sous forme oxydée, le composé comportant du titane peut s'intégrer dans la phase vitreuse assurant la protection de la pièce à haute température, et ce faisant peut ajuster sa température de ramollissement afin que celle-ci se rapproche au maximum de la température d'utilisation de la pièce. Cela permet avantageusement que la phase vitreuse présente une température de ramollissement idéale pour assurer une protection optimale à la température d'utilisation de la pièce.

En particulier, durant le traitement thermique, la température de traitement peut de préférence être imposée pendant une durée supérieure ou égale à 1 heure, par exemple comprise entre 1 heure et 15 heures.

Le traitement thermique peut être réalisé sous atmosphère oxydante, par exemple sous air. En variante, le traitement thermique peut être réalisé sous atmosphère inerte, par exemple sous azote.

La proportion de phosphate métallique sous forme amorphe obtenu dans le revêtement après l'étape b) peut dépendre de la température de traitement et de la durée d'application de celle-ci. Par exemple, une augmentation de la durée d'application de la température de traitement peut conduire à un abaissement de la proportion de phosphate métallique sous forme amorphe dans le revêtement.

De préférence, après l'étape b), le revêtement obtenu peut être tel que le rapport (masse de phosphate métallique sous forme amorphe dans le revêtement)/(masse de phosphate métallique sous forme amorphe dans le revêtement+masse de phosphate métallique sous forme cristalline dans le revêtement) soit supérieur ou égal à 0,1, de préférence à 0,2. En particulier, ce rapport peut être compris entre 0,1 et 0,7, de préférence entre 0,2 et 0,5.

Avantageusement, la composition de revêtement peut, en outre, comporter un agent organique dispersant. L'agent organique dispersant est avantageusement suffisamment mouillant pour conférer au revêtement formé une très bonne adhérence à la pièce sous-jacente.

L'agent organique dispersant peut être un agent organique dispersant, soluble dans l'eau et non ionique, de type acide gras oxyéthyléné, alcool gras oxyéthyléné, alkyl-phénol oxyéthyléné ou ester poly-ol supérieur. L'agent organique dispersant peut encore être un polyol acétylénique alcoxylé par exemple commercialisé sous la dénomination « Surfynol® » par la société des Etats-Unis d'Amérique : Air Products Chemicals, Inc.. On peut encore utiliser comme agent organique dispersant des produits commercialisés sous la dénomination « Levenol® » par la société KAO Corporation ou « Marlophen NP9 » par la société Sasol Gmbh.

Dans un exemple de réalisation, le composé comportant du titane peut être choisi parmi : le titane métal (Ti), le diborure de titane (TiB₂), le carbure de titane (TiC), le dioxyde de titane (TiO₂) et leurs mélanges. De préférence, la composition de revêtement peut comporter une poudre de titane métal et/ou une poudre de diborure de titane.

La composition de revêtement peut, en outre, comporter une charge réfractaire. Cette charge peut être présente, dans la composition de revêtement avant l'étape a), en une teneur massique inférieure ou égale à 5 %. Cette charge peut comporter un ou plusieurs oxydes, nitrures ou carbures réfractaires (autres que B₄C).

Par ailleurs, concernant le phosphate métallique mis en oeuvre, la composition de revêtement peut comporter un phosphate d'aluminium, par exemple de l'hydrogéno-phosphate d'aluminium Al(H₂PO₄)₃.

Selon un mode de mise en oeuvre du procédé, la composition de revêtement peut comporter avant l'étape a) :
- le phosphate métallique en une teneur massique comprise entre 27 % et 36 %,
- la poudre de B₄C en une teneur massique comprise entre 11,5 % et 21 %, et
- la poudre du composé comportant du titane en une teneur massique comprise entre 8 % et 18 %.

Par « la composition de revêtement comportant... la poudre du composé comportant du titane en une teneur massique comprise entre 8 % et 18 % », il faut comprendre, lorsque la composition de revêtement comporte une pluralité de composés comportant du titane différents, que la somme des teneurs massiques des différents composés comportant du titane est comprise entre 8% et 18%.

Selon un mode de mise en oeuvre du procédé, la composition de revêtement peut comporter avant l'étape a) :
- du phosphate d'aluminium en une teneur massique comprise entre 27 % et 36 %,
- la poudre de B₄C en une teneur massique comprise entre 11,5 % et 21 %,
- la poudre du composé comportant du titane en une teneur massique comprise entre 8 % et 18 %,
- un polyol acétylénique alcoxylé en une teneur massique comprise entre 0,1 % et 1,5 %,
- de l'eau en une teneur massique comprise entre 33 % et 50 %, et
- optionnellement une charge réfractaire en une teneur massique inférieure ou égale à 5%.

En particulier, la composition de revêtement peut avant l'étape a) être constituée par :
- du phosphate d'aluminium en une teneur massique comprise entre 27 % et 36 %,
- une poudre de B₄C en une teneur massique comprise entre 11,5 % et 21 %,
- une poudre d'au moins un composé comportant du titane en une teneur massique comprise entre 8 % et 18 %,
- un polyol acétylénique alcoxylé en une teneur massique comprise entre 0,1 % et 1,5 %,
- de l'eau en une teneur massique comprise entre 33 % et 50 %, et
- optionnellement une charge réfractaire en une teneur massique inférieure ou égale à 5%.

Dans un exemple de réalisation, la composition de revêtement peut, en outre, comporter un composé vitreux autocicatrisant.

Dans un exemple de réalisation, au moins une couche de protection interne peut être formée, avant l'étape a), par imprégnation d'au moins une partie de la pièce en matériau composite par une composition d'imprégnation comportant un phosphate métallique.

La composition d'imprégnation peut être une solution aqueuse.

La composition d'imprégnation peut comporter un phosphate d'aluminium, par exemple de l'hydrogéno-phosphate d'aluminium.

La présente invention vise également une composition de revêtement sous forme de suspension aqueuse comportant :
- un phosphate métallique,
- une poudre d'un composé comportant du titane, et
- une poudre de B₄C.

La composition de revêtement selon l'invention peut être destinée à être utilisée pour la mise en oeuvre d'un procédé tel que décrit plus haut.

Dans un exemple de réalisation, la composition peut comporter :
- le phosphate métallique en une teneur massique comprise entre 27 % et 36 %,
- la poudre de B₄C en une teneur massique comprise entre 11,5 % et 21 %, et
- la poudre du composé comportant du titane en une teneur massique comprise entre 8 % et 18 %.

Dans un exemple de réalisation, la composition peut comporter :
- du phosphate d'aluminium en une teneur massique comprise entre 27 % et 36 %,
- la poudre de B₄C en une teneur massique comprise entre 11,5 % et 21 %,
- la poudre du composé comportant du titane en une teneur massique comprise entre 8 % et 18 %,
- un polyol acétylénique alcoxylé en une teneur massique comprise entre 0,1 % et 1,5 %, et
- de l'eau en une teneur massique comprise entre 33 % et 50 %.

En particulier, la composition peut être constituée par :
- du phosphate d'aluminium en une teneur massique comprise entre 27 % et 36 %,
- une poudre de B₄C en une teneur massique comprise entre 11,5 % et 21 %,
- une poudre d'au moins un composé comportant du titane en une teneur massique comprise entre 8 % et 18 %,
- un polyol acétylénique alcoxylé en une teneur massique comprise entre 0,1 % et 1,5 %,
- de l'eau en une teneur massique comprise entre 33 % et 50 %, et
- optionnellement une charge réfractaire en une teneur massique inférieure ou égale à 5%.

Plus généralement, les caractéristiques de la composition de revêtement décrites plus haut dans le cadre du procédé selon l'invention s'appliquent à cet aspect de l'invention.

De préférence, du titane sec peut être utilisé pour constituer le composé comportant du titane présent dans la composition de revêtement selon l'invention.

L'utilisation du titane sec est avantageuse économiquement car le titane sec est disponible dans des quantités industrielles à un prix relativement faible.

### Brève description des dessins

D'autres particularités et avantages du procédé ressortiront à la lecture de la description faite ci-après, à titre indicatif mais non limitatif, en référence aux dessins annexés sur lesquels :
- la figure 1 montre des étapes successives d'un exemple de procédé selon l'invention ;
- la figure 2 montre des courbes illustrant la variation de masse en fonction de durées d'oxydation pour des échantillons en matériau composite C/C munis d'une protection contre l'oxydation par un procédé selon l'invention ;
- les figures 3A et 3B montrent des courbes illustrant la variation de masse en fonction de durées d'oxydation pour des échantillons en matériau composite C/C protégés contre l'oxydation par mise en oeuvre de procédés selon l'invention et exposés à un catalyseur de l'oxydation du carbone ;
- la figure 4 montre les performances en termes de protection contre l'oxydation de compositions de revêtement incorporant différents composés du bore ;
- la figure 5 montre les performances en termes de protection contre l'oxydation de compositions de revêtement incorporant différents composés comportant du titane ;
- la figure 6 montre notamment les performances en termes de protection contre l'oxydation d'une composition de revêtement comportant un composé vitreux de type borosilicate ;
- la figure 7 montre les performances en termes de protection contre l'oxydation conférées par différents procédés selon l'invention ; et
- la figure 8 compare les performances en termes de protection contre l'oxydation conférées, d'une part, par un procédé selon l'invention et, d'autre part, par un procédé connu de l'état de la technique.

### Description détaillée de modes de réalisation

Dans la description qui suit, on envisage la protection contre l'oxydation de pièces en matériau composite C/C, plus particulièrement de disques de freins. Plus généralement, l'invention est applicable à la protection contre l'oxydation de toutes pièces en matériau composite contenant du carbone.

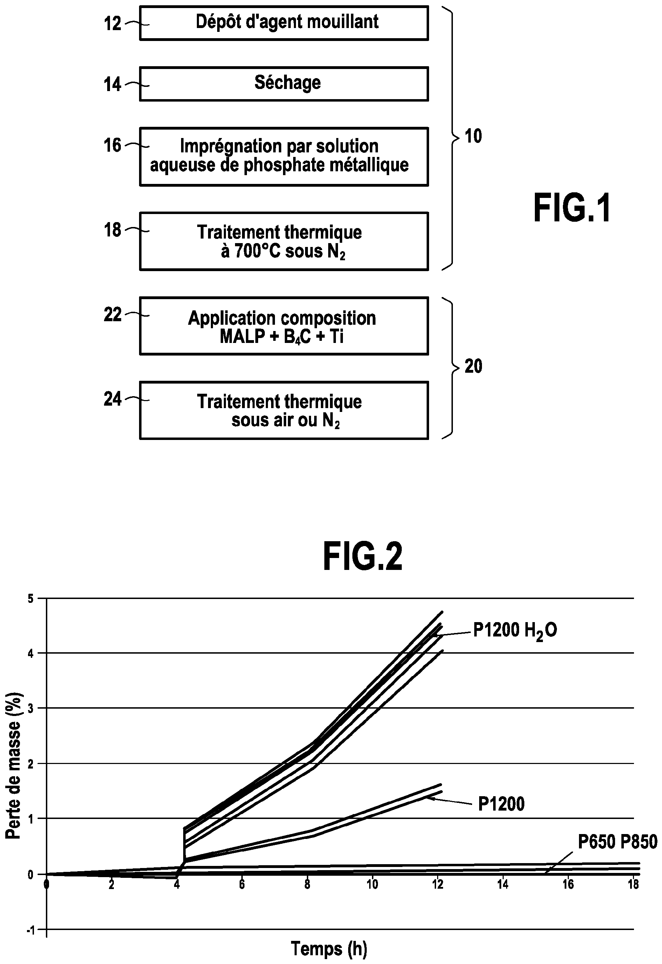

Selon le mode particulier de mise en oeuvre du procédé de la figure 1, une première phase 10 consiste à former au sein de la porosité accessible de la pièce, ou d'une partie de la pièce à protéger, une protection interne comprenant au moins un phosphate métallique apte notamment à apporter une protection contre l'oxydation catalytique du carbone.

On peut procéder comme décrit dans le document US 5 853 821. Une première étape 12 consiste à déposer un agent mouillant au sein de la porosité accessible du matériau composite. On utilise à cet effet une solution aqueuse d'un agent mouillant tel que par exemple le produit commercialisé par la société allemande Sasol Gmbh sous la dénomination "Marlophen NP9". Après imprégnation du matériau composite par cette solution d'agent mouillant et séchage (étape 14), une première composition d'imprégnation sous forme d'une solution aqueuse contenant un phosphate métallique est appliquée sur l'intégralité de la surface extérieure de la pièce ou, de façon sélective, sur une partie de la surface extérieure de la pièce, par exemple au pinceau ou par projection (i.e. pulvérisation au pistolet) (étape 16). On utilise par exemple une solution aqueuse d'hydrogéno-phosphate d'aluminium Al(H₂PO₄)₃. Le phosphate métallique peut encore être un phosphate de zinc, ayant par exemple la formule chimique suivante : Zn₃(PO₄)_{2.}xH₂O, un phosphate de manganèse, ayant par exemple la formule chimique suivante : Mn(H₂PO₄)₂.2H₂O ou encore un phosphate de magnésium ayant par exemple la formule chimique suivante : Mg₃(PO₄)₂.8H₂O..

L'agent mouillant présent sur la surface des pores accessibles du matériau composite facilite la pénétration de la composition d'imprégnation au sein de la porosité accessible du matériau composite. Un séchage puis un traitement thermique (étape 18) sont ensuite réalisés afin de limiter l'accessibilité de la surface des pores grâce à une protection interne en phosphate métallique. Le traitement thermique est réalisé en élevant la température jusqu'à un palier d'une ou plusieurs heures à une température comprise entre 200°C et 750°C, par exemple environ 700°C sous atmosphère non oxydante, par exemple sous azote (N₂).

Une deuxième phase 20 du procédé consiste à former un revêtement de protection externe couvrant et nappant.

A cet effet, on peut utiliser une deuxième composition (aussi dénommée composition de revêtement) constituée essentiellement par, c'est-à-dire pour au moins 90 % en masse, au moins un phosphate métallique, une poudre de carbure de bore B₄C, une poudre de titane, au moins un agent dispersant et de l'eau.

Le phosphate métallique peut être de l'hydrogéno-phosphate d'aluminium Al(H₂PO₄)₃. Un tel composé est commercialement disponible en solution aqueuse à 48%-50 % en masse. De la même manière que plus haut, on peut utiliser un phosphate de zinc, de manganèse ou de magnésium.

Le carbure de bore B₄C peut de préférence être sous forme de particules ayant une taille inférieure ou égale à 30 µm, par exemple inférieure ou égale à 7,5 µm. Sauf mention contraire, par « taille », on désigne la dimension donnée par la distribution granulométrique statistique à la moitié de la population, dite D50.

Le titane en poudre utilisé est de préférence sous forme de particules de titane sec (non en suspension dans de l'eau) ayant une taille de préférence inférieure à 150 µm. Des charges réfractaires autres que B₄C peuvent être ajoutées dans une proportion de préférence inférieure à 10 % en masse, par exemple une ou plusieurs poudres de céramique du type oxyde, nitrure ou carbure.

L'agent organique dispersant peut être tel que mentionné plus haut et, en particulier, être un polyol acétylénique alcoxylé commercialisé sous la dénomination « Surfynol® », en particulier « Surfynol® 440 ». Comme mentionné plus haut, cet agent organique dispersant peut être suffisamment mouillant pour assurer une très bonne cohésion entre le revêtement et la pièce sous-jacente. L'agent organique dispersant peut en effet permettre au phosphate métallique de la deuxième composition de pénétrer dans la porosité résiduelle pour créer des points d'ancrage forts chimique et mécanique avec la sous-couche de protection interne en phosphate métallique.

Les charges réfractaires additionnelles, par exemple en une ou plusieurs céramiques de type oxyde, nitrure ou carbure, peuvent être sous forme de particules ayant de préférence une taille inférieure à 150 µm.

La deuxième composition est appliquée par exemple au pinceau ou par projection (étape 22) sur la surface extérieure de la pièce ou sur une partie de cette surface extérieure, de préférence aux mêmes emplacements que la première composition. Dans le cas de disques de frein en matériau composite à base de carbone, l'application de la première composition et de la deuxième composition peut être limitée aux parties de surface extérieure non frottantes, la surface annulaire frottante d'un disque d'extrémité d'un ensemble de disques stators et rotors ou les surfaces frottantes opposées des disques situés entre les disques d'extrémité étant alors non-imprégnées pour éviter une altération des propriétés tribologiques. Ensuite, un traitement thermique final est réalisé (étape 24) en élevant la température graduellement jusqu'à une valeur comprise entre 330°C et 730°C, avec palier d'une ou plusieurs heures à cette température. La température relativement modérée du traitement thermique permet de conserver une phase de phosphate métallique à l'état amorphe, préservant ainsi sa capacité de nappage. Le traitement thermique de l'étape 24 n'est pas nécessairement réalisé sous atmosphère non-oxydante. Ce traitement thermique peut être réalisé sous air ou azote. En particulier, ce traitement thermique peut être effectué sous air jusqu'à 350°C ou sous azote au-delà de 350°C.

La quantité de deuxième composition appliquée peut être choisie pour obtenir lors de l'étape b) un revêtement sur la surface externe de la pièce ayant une épaisseur moyenne (moyenne arithmétique) comprise entre 20 µm et 150 µm. L'invention permet avantageusement de disposer d'une très bonne protection contre l'oxydation avec un revêtement ayant une épaisseur significativement plus faible que les revêtements connus de l'art antérieur.

L'épaisseur du revêtement est mesurée perpendiculairement à la surface externe de la pièce revêtue.

### Exemple 1

Des pièces en matériau composite C/C de disques de freins d'avions ayant une densité comprise entre 1,65 g/cm³ et 1,9 g/cm³ environ et une porosité résiduelle volumique allant de 6 % à 18 % environ ont été munies d'une protection anti-oxydation de la façon suivante :
- imprégnation par une première composition formée d'une solution aqueuse de "Marlophen NP 9" et séchage,
- application d'une solution aqueuse de phosphate mono-aluminique à 50 % en masse d'eau au pinceau ou par projection (i.e. pulvérisation au pistolet) robotisée,
- traitement thermique sous atmosphère d'azote (N₂) par élévation progressive de la température jusqu'à 700°C et maintien à cette température pendant 1 heure minimum,
- application au pinceau ou par projection de la deuxième composition suivante comportant en masse :
- 67 % de solution aqueuse de phosphate mono-aluminique à 50 % en masse d'eau
- 16,3 % de poudre de B₄C à 2 % au plus d'impuretés, les grains de la poudre ayant une taille inférieure à 7,5 µm
- 11 % de poudre de titane sec de granulométrie allant jusqu'à 150 µm (taille des grains : 90 µm environ) ou, plus faible, allant jusqu'à 50 µm (taille des grains : 20µm environ)
- 4,7 % d'eau
- 1 % de "Surfynol® 440"
- traitement thermique sous air par élévation progressive de la température jusqu'à 350°C et maintien à cette température pendant 10 heures.

Selon les pièces, la couche de composition de revêtement (couche de deuxième composition) présentait avant traitement thermique une masse surfacique variant entre 16 et 22 mg/cm². Selon les pièces, le revêtement obtenu après le traitement thermique présentait une épaisseur variant de 40 µm à 70 µm.

Deux essais supplémentaires similaires ont été effectués dans lesquels :
- le traitement thermique final a été réalisé sous air par élévation progressive de la température jusqu'à 350°C et maintien à cette température pendant 5 heures, et
- le traitement thermique final a été réalisé sous air par élévation progressive de la température jusqu'à 450°C et maintien à cette température pendant 8 heures.

L'analyse spectroscopique RMN 1D/2D des noyaux solides ³¹P et ²⁷Al a permis de quantifier les proportions massiques des phases cristalline et amorphe de phosphate métallique dans le revêtement obtenu. Les résultats obtenus sont présentés dans le tableau 1 ci-dessous.

**Tableau 1**

| **Echantillon** | **Proportion phosphate métallique cristallin** | **Proportion phosphate métallique amorphe** |
|---|---|---|
| Exemple 1 350°C, 5 heures, air | 76% | 24% |
| Exemple 1 450°C, 8 heures, air | 89% | 11% |

Pour cet exemple de deuxième composition, la température à partir de laquelle on commence à obtenir un revêtement comportant à la fois du phosphate mono-aluminique amorphe et du phosphate mono-aluminique cristallin est d'environ de 330°C.

Les pièces munies de la protection anti-oxydation ont été soumises aux protocoles d'oxydation suivants :
- P650 : exposition à 650°C sous air pendant 4 h, répétée 6 fois avec retour à la température ambiante après chaque exposition,
- P850 : exposition à 850°C sous air pendant 30 min, répétée 6 fois avec retour à la température ambiante après chaque exposition,
- P1200 : exposition à 650°C pendant 4 h, retour à température ambiante, puis exposition à 1200°C pendant 15 min, retour à température ambiante, puis deux fois à 650°C pendant 4 h avec retour intermédiaire à température ambiante,
- P1200 H₂O : même protocole que P1200 en ajoutant 24 h dans de l'eau à température ambiante après le flash à 1200°C et avant les deux expositions finales à 650°C,
P650AcK : exposition sous air à 650°C pendant 4 h, puis pollution par de l'acétate de potassium à température ambiante, puis deux expositions sous air à 650°C pendant 4 h avec retour intermédiaire à température ambiante,
P1200AcK : même protocole que P650AcK en ajoutant une exposition sous air à 1200°C pendant 15 minutes après la première exposition sous air à 650°C, la pollution à l'AcK étant réalisée après le flash à 1200°C.

La figure 2 montre pour différentes pièces la perte de masse relative en % mesurée lors des protocoles d'oxydation sans pollution par l'acétate de potassium, la protection ayant été réalisée avec une deuxième composition contenant de la poudre de titane de granulométrie inférieure ou égale à 150 µm.

On constate une très bonne résistance à l'oxydation y compris à température élevée et en présence d'eau puisque la perte de masse est inférieure à 5 %. A titre de comparaison, pour un protocole d'oxydation similaire au protocole P1200H₂O ci-dessus, la perte de masse constatée avec des pièces protégées selon le procédé du document US 2007/0026153 est d'environ 7 %.

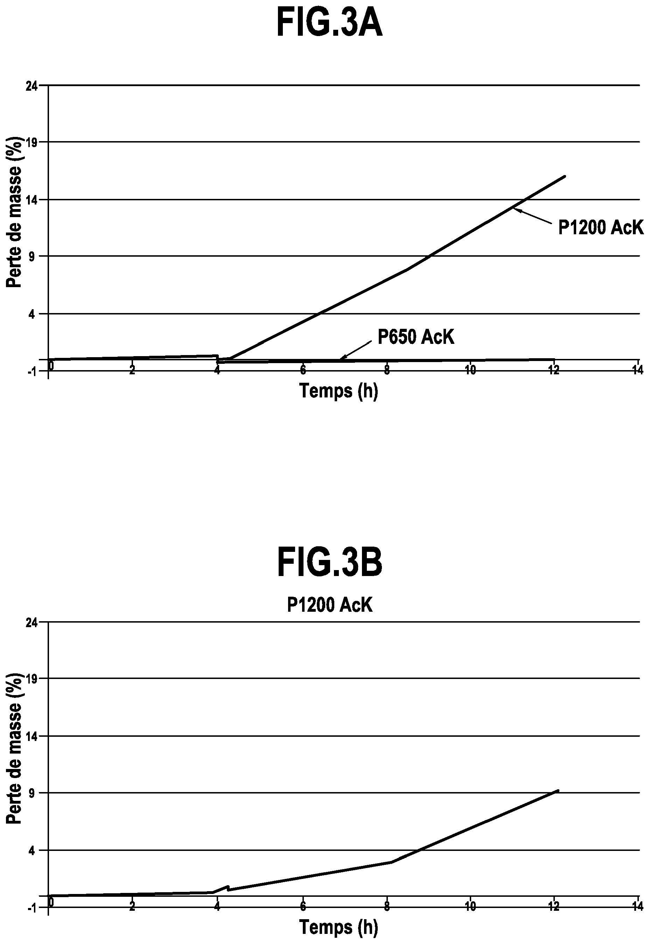

La figure 3A montre la perte de masse relative en % mesurée lors des protocoles d'oxydation avec la pollution par l'acétate de potassium, la protection ayant été réalisée avec une deuxième composition contenant de la poudre de titane de granulométrie inférieure à 50 µm.

On a aussi représenté à la figure 3B les performances obtenues après mise en oeuvre d'un procédé similaire à celui décrit plus haut et traitement avec une deuxième composition ayant la composition massique suivante :
- 27,7% de phosphate mono-aluminique,
- 13,5% de poudre de B₄C,
- 9% de poudre de titane,
- 0,8% de Surfynol®,
- 49% d'eau.

Comme illustré à la figure 3B, une telle composition fournit suite à la mise en oeuvre d'un protocole P1200 AcK une excellente protection contre l'oxydation catalytique.

### Exemple 2 : effet technique produit par la mise en oeuvre d'une poudre de B₄C

Dans cet exemple, les performances en termes de résistance à l'oxydation de trois compositions ont été comparées. Les trois compositions testées diffèrent selon la nature chimique du composé du bore présent.

Plus précisément, des pièces en matériau composite C/C de disques de freins d'avions ayant une densité comprise entre 1,65 g/cm³ et 1,9 g/cm³ environ et une porosité résiduelle volumique allant de 6% à 18 % environ ont été munies d'une protection anti-oxydation de la façon suivante :
- imprégnation par une première composition formée d'une solution aqueuse de "Marlophen NP 9" et séchage,
- application au pinceau d'une solution aqueuse de phosphate mono-aluminique à 50 % en masse d'eau,
- traitement thermique sous atmosphère d'azote (N₂) par élévation progressive de la température jusqu'à 700°C et maintien à cette température pendant 1 h minimum,
- application au pinceau de la deuxième composition suivante comportant en masse :
   - 34% de phosphate mono-aluminique,
   - 16% de composé du bore (B, ZrB₂ ou B₄C selon la composition testée),
   - 11,2% de poudre de titane,
   - 38,8% d'eau,
- traitement thermique sous air par élévation progressive de la température jusqu'à 350°C et maintien à cette température pendant 10 h.

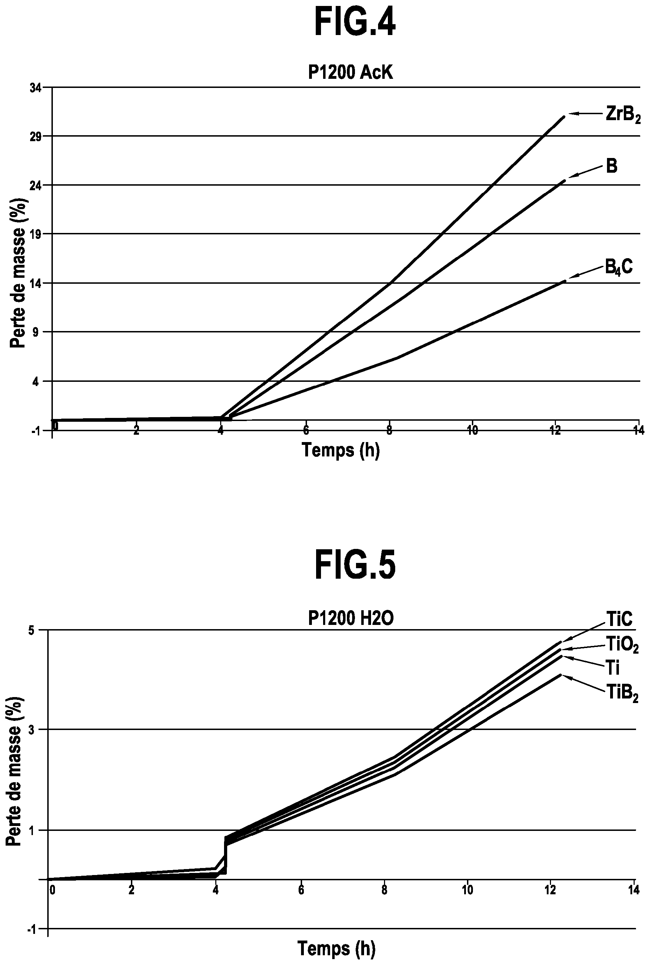

La figure 4 montre les performances en termes de protection contre l'oxydation des différentes compositions selon la nature du composé du bore présent (protocole mis en oeuvre : P1200 AcK).

L'incorporation dans les compositions de revêtement selon l'invention d'une poudre de B₄C procure des résultats significativement supérieurs en terme de protection contre l'oxydation par rapport à l'emploi d'autres poudres à base de bore, comme des poudres de bore ou de ZrB₂.

### Exemple 3 : Essais en faisant varier la nature chimique du composé comportant du titane

Dans cet essai, les performances en termes de résistance à l'oxydation conférée par différentes compositions de revêtement selon l'invention ont été évaluées. Chacune de ces compositions de revêtement incorpore un composé comportant du titane différent.

Des pièces en matériau composite C/C de disques de freins d'avions ayant une densité comprise entre 1,65 g/cm³ et 1,9 g/cm³ environ et une porosité résiduelle volumique allant de 6% à 18 % environ ont été munies d'une protection anti-oxydation de la façon suivante :
- imprégnation par une première composition formée d'une solution aqueuse de "Marlophen NP 9" et séchage,
- application au pinceau d'une solution aqueuse de phosphate mono-aluminique à 50 % en masse d'eau,
- traitement thermique sous atmosphère d'azote (N₂) par élévation progressive de la température jusqu'à 700°C et maintien à cette température pendant 1 h minimum,
- application au pinceau de la deuxième composition,
- traitement thermique sous air par élévation progressive de la température jusqu'à 350°C et maintien à cette température pendant 10 h.

Les formulations massiques des deuxièmes compositions mises en oeuvre sont données ci-dessous :
- Composition « Ti » (la courbe correspondante est désignée par « Ti » dans les dessins) :
   - 34% de phosphate mono-aluminique,
   - 16% de poudre de B₄C,
   - 11,2% de poudre de titane,
   - 38,8% d'eau,
- Composition « TiB₂ » (la courbe correspondante est désignée par « TiB₂ » dans les dessins) :
   - 34,4% de phosphate mono-aluminique,
   - 14,2% de poudre de B₄C,
   - 16% de poudre de TiB₂,
   - 1% de Surfynol®,
   - 34,4% d'eau,
- Composition « TiC » (la courbe correspondante est désignée par « TiC » dans les dessins ») :
   - 36% de phosphate mono-aluminique,
   - 12,2% de poudre de B₄C,
   - 14,7% de poudre de TiC,
   - 1% de Surfynol®,
   - 36% d'eau,
- Composition « TiO₂ » (la courbe correspondante est désignée par « TiO₂ » dans les dessins) :
   - 34,75% de phosphate mono-aluminique,
   - 11,8% de poudre de B₄C,
   - 17,8% de poudre de TiO₂,
   - 1% de Surfynol®,
   - 34,75% d'eau.

Comme illustré à la figure 5, l'emploi de différents composés comportant du titane permet d'obtenir une très bonne résistance à l'oxydation y compris à température élevée et en présence d'eau puisque la perte de masse est inférieure à 5 %.

### Exemple 4 : Composition comportant un composé vitreux autocicatrisant

Une pièce en matériau composite C/C de disque de frein d'avion ayant une densité comprise entre 1,65 g/cm³ et 1,9 g/cm³ environ et une porosité résiduelle volumique allant de 6% à 18 % environ a été munie d'une protection anti-oxydation de la façon suivante :
- imprégnation par une première composition formée d'une solution aqueuse de "Marlophen NP 9" et séchage,
- application au pinceau d'une solution aqueuse de phosphate mono-aluminique à 50 % en masse d'eau,
- traitement thermique sous atmosphère d'azote (N₂) par élévation progressive de la température jusqu'à 700°C et maintien à cette température pendant 1 h minimum,
- application au pinceau de la deuxième composition suivante comportant en masse :
   - 30% de phosphate mono-aluminique,
   - 14,5% de poudre de B₄C,
   - 9,8% de poudre de titane,
   - 1% de Surfynol®,
   - 34% d'eau,
   - 10,7% de poudre de verre « Pyrex® »
- traitement thermique sous air par élévation progressive de la température jusqu'à 350°C et maintien à cette température pendant 10 h.

La courbe correspondante est désignée par « Pyrex® » dans les dessins.

La composition du Pyrex est sensiblement la suivante (en pourcentages massiques) :
- SiO₂: 80,60%
- B₂O₃: 12,60%
- Na₂O₃: 4,2%
- Al₂O₃: 2,25%
- Cl: 0,1%
- CaO: 0,1%
- MgO: 0,05%
- Fe₂O₃: 0,05%

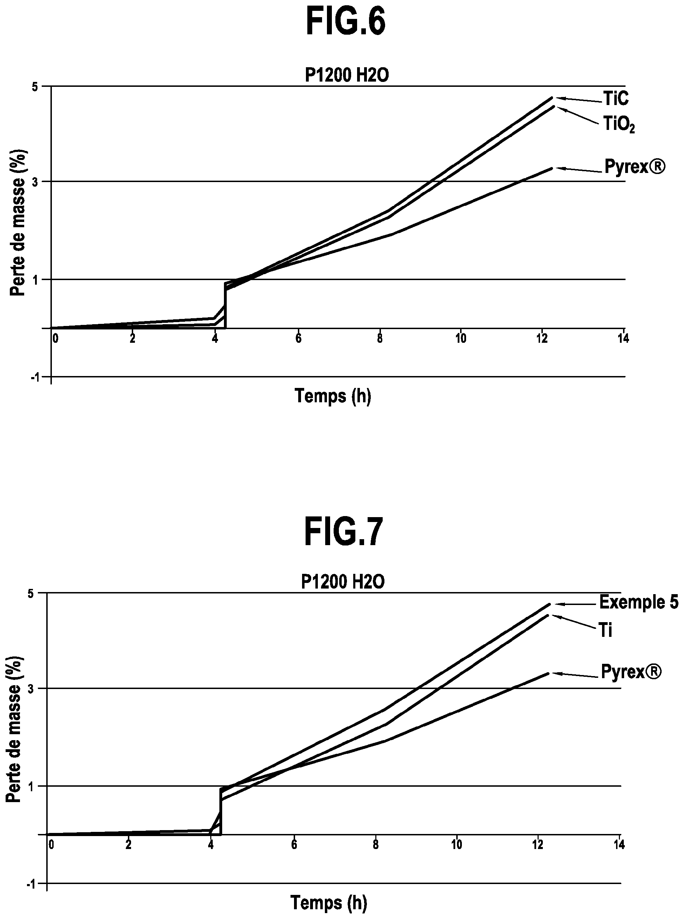

On constate qu'une telle composition de revêtement fournit une excellente protection à l'oxydation (voir figure 6). Pour mémoire, les courbes « TiC » et « TiO₂ » introduites plus haut sont présentes sur la figure 6.

### Exemple 5 : Influence de la température du traitement thermique réalisé

### lors de l'étape b)

Dans cet exemple, une pièce en matériau composite C/C de disque de frein d'avion ayant une densité comprise entre 1,65 g/cm³ et 1,9 g/cm³ environ et une porosité résiduelle volumique allant de 6% à 18 % environ a été munie d'une protection anti-oxydation de la façon suivante :
- imprégnation par une première composition formée d'une solution aqueuse de "Marlophen NP 9" et séchage,
- application au pinceau d'une solution aqueuse de phosphate mono-aluminique à 50 % en masse d'eau,
- traitement thermique sous atmosphère d'azote (N₂) par élévation progressive de la température jusqu'à 700°C et maintien à cette température pendant 1 h minimum,
- application au pinceau de la deuxième composition suivante comportant en masse :
   - 33,5% de phosphate mono-aluminique,
   - 16,3% de poudre de B₄C,
   - 11% de poudre de titane,
   - 1% de Surfynol®,
   - 38,2% d'eau,
- traitement thermique sous air par élévation progressive de la température jusqu'à 650°C et maintien à cette température pendant 1 h minimum.

La courbe correspondante est désignée par « exemple 5 » dans les dessins.

La figure 7 montre que l'on obtient après traitement thermique à 650°C de bonnes propriétés de résistance à l'oxydation. La figure 7 comporte aussi les courbes « Ti » et « Pyrex » décrites plus haut.

L'analyse spectroscopique RMN 1D/2D des noyaux solides ³¹P et ²⁷Al a permis de quantifier les proportions massiques des phases cristalline et amorphe de phosphate métallique dans le revêtement obtenu. Les résultats obtenus sont présentés dans le tableau 2 ci-dessous.

**Tableau 2**

| **Echantillon** | **Proportion phosphate métallique cristallin** | **Proportion phosphate métallique amorphe** |
|---|---|---|
| Exemple 5 650°C, 1 heure, N₂ | 59% | 41% |

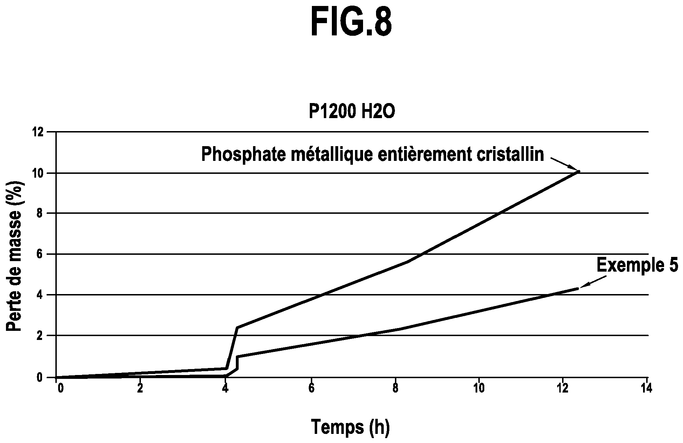

La figure 8 compare la performance en termes de protection contre l'oxydation (protocole P1200 H₂O) d'un revêtement constitué d'une composition de phosphate métallique entièrement sous forme cristalline (désignée à la figure 8 par « Phosphate métallique entièrement cristallin ») et d'un revêtement obtenu après traitement selon l'exemple 5 selon l'invention. La figure 8 montre que le revêtement protecteur obtenu après mise en oeuvre d'un procédé selon l'invention confère une très bonne résistance à l'oxydation en comparaison des procédés connus de l'art antérieur.

L'expression « comportant/contenant/comprenant un(e) » doit se comprendre comme « comportant/contenant/comprenant au moins un(e) ».

L'expression « compris(e) entre ... et ... » ou « allant de ... à ... » doit se comprendre comme incluant les bornes.

## Revendications

1. Procédé de protection contre l'oxydation d'une pièce en matériau composite comportant du carbone, le procédé comportant les étapes suivantes :
a) application, sur au moins une partie de la surface externe de la pièce, d'une composition de revêtement sous forme de suspension aqueuse comportant :
- un phosphate métallique,
- une poudre d'un composé comportant du titane, et
- une poudre de B₄C, et
b) traitement thermique de la composition de revêtement appliquée lors de l'étape a), une température de traitement comprise entre 330°C et 730°C étant imposée durant le traitement thermique afin d'obtenir sur la surface externe de la pièce un revêtement comportant une première phase dans laquelle le phosphate métallique est sous forme cristalline et une deuxième phase dans laquelle le phosphate métallique est sous forme amorphe.

2. Procédé selon la revendication 1, **caractérisé en ce que** la composition de revêtement comporte, en outre, un agent organique dispersant.

3. Procédé selon la revendication 2, **caractérisé en ce que** l'agent organique dispersant est un polyol acétylénique alcoxylé.

4. Procédé selon l'une quelconque des revendications 1 à 3, **caractérisé en ce que** le composé comportant du titane est choisi parmi : le titane métal, le diborure de titane, le carbure de titane, le dioxyde de titane et leurs mélanges.

5. Procédé selon la revendication 4, **caractérisé en ce que** la composition de revêtement comporte une poudre de titane métal et/ou une poudre de diborure de titane.

6. Procédé selon l'une quelconque des revendications 1 à 5, **caractérisé en ce que** la composition de revêtement comporte un phosphate d'aluminium.

7. Procédé selon l'une quelconque des revendications 1 à 6, **caractérisé en ce que** la composition de revêtement comporte, en outre, un composé vitreux autocicatrisant.

8. Procédé selon l'une quelconque des revendications 1 à 7, **caractérisé en ce que** la composition de revêtement comporte avant l'étape a) :
- le phosphate métallique en une teneur massique comprise entre 27 % et 36 %,
- la poudre de B₄C en une teneur massique comprise entre 11,5 % et 21 %, et
- la poudre du composé comportant du titane en une teneur massique comprise entre 8 % et 18 %.

9. Procédé selon la revendication 8, **caractérisé en ce que** la composition de revêtement comporte avant l'étape a) :
- du phosphate d'aluminium en une teneur massique comprise entre 27 % et 36 %,
- la poudre de B₄C en une teneur massique comprise entre 11,5 % et 21 %,
- la poudre du composé comportant du titane en une teneur massique comprise entre 8 % et 18 %,
- un polyol acétylénique alcoxylé en une teneur massique comprise entre 0,1 % et 1,5 %, et
- de l'eau en une teneur massique comprise entre 33 % et 50 %.

10. Procédé selon l'une quelconque des revendications 1 à 9, **caractérisé en ce qu'**au moins une couche de protection interne est formée, avant l'étape a), par imprégnation d'au moins une partie de la pièce en matériau composite par une composition d'imprégnation comportant un phosphate métallique.

11. Procédé selon la revendication 10, **caractérisé en ce que** la composition d'imprégnation comporte un phosphate d'aluminium.

12. Procédé selon l'une quelconque des revendications 1 à 11, **caractérisé en ce que** la température de traitement est imposée durant le traitement thermique pendant une durée supérieure ou égale à 1 heure.

13. Composition de revêtement sous forme de suspension aqueuse comportant :
- un phosphate métallique,
- une poudre d'un composé comportant du titane, et
- une poudre de B₄C.

14. Composition selon la revendication 13, **caractérisée en ce qu'**elle comporte :
- le phosphate métallique en une teneur massique comprise entre 27 % et 36 %,
- la poudre de B₄C en une teneur massique comprise entre 11,5 % et 21 %, et
- la poudre du composé comportant du titane en une teneur massique comprise entre 8 % et 18 %.

15. Composition selon la revendication 14, **caractérisée en ce qu'**elle comporte :
- du phosphate d'aluminium en une teneur massique comprise entre 27 % et 36 %,
- la poudre de B₄C en une teneur massique comprise entre 11,5 % et 21 %,
- la poudre du composé comportant du titane en une teneur massique comprise entre 8 % et 18 %,
- un polyol acétylénique alcoxylé en une teneur massique comprise entre 0,1 % et 1,5 %, et
- de l'eau en une teneur massique comprise entre 33 % et 50 %.

## Patentansprüche

1. Verfahren zum Schutz eines Teils aus Kohlenstoff enthaltendem Verbundwerkstoff vor Oxidation, wobei das Verfahren die folgenden Schritte umfasst:
a) Aufbringen, auf wenigstens einen Teil der Außenfläche des Teils, einer Beschichtungszusammensetzung in Form einer wässrigen Suspension, umfassend:
- ein Metallphosphat
- ein Pulver einer Titan enthaltenden Verbindung und
- ein B₄C-Pulver sowie
b) Wärmebehandlung der bei Schritt a) aufgebrachten Beschichtungszusammensetzung, wobei während der Wärmebehandlung eine Behandlungstemperatur zwischen 330 °C und 730 °C auferlegt wird, um auf der Außenfläche des Teils eine Beschichtung zu erhalten, die eine erste Phase, in der das Metallphosphat in kristalliner Form vorliegt, und eine zweite Phase, in der das Metallphosphat in amorpher Form vorliegt, umfasst.

2. Verfahren nach Anspruch 1, **dadurch gekennzeichnet, dass** die Beschichtungszusammensetzung ferner ein organisches Dispergiermittel umfasst.

3. Verfahren nach Anspruch 2, **dadurch gekennzeichnet, dass** das organische Dispergiermittel ein alkoxyliertes Acetylen-Polyol ist.

4. Verfahren nach einem der Ansprüche 1 bis 3, **dadurch gekennzeichnet, dass** die Titan enthaltende Verbindung ausgewählt ist aus: Titanmetall, Titandiborid, Titancarbid, Titandioxid und deren Mischungen.

5. Verfahren nach Anspruch 4, **dadurch gekennzeichnet, dass** die Beschichtungszusammensetzung ein Titanmetall-Pulver und/oder ein Titandiborid-Pulver umfasst.

6. Verfahren nach einem der Ansprüche 1 bis 5, **dadurch gekennzeichnet, dass** die Beschichtungszusammensetzung ein Aluminiumphosphat umfasst.

7. Verfahren nach einem der Ansprüche 1 bis 6, **dadurch gekennzeichnet, dass** die Beschichtungszusammensetzung ferner eine selbstheilende Glasverbindung umfasst.

8. Verfahren nach einem der Ansprüche 1 bis 7, **dadurch gekennzeichnet, dass** die Beschichtungszusammensetzung vor Schritt a) umfasst:
- das Metallphosphat in einem Massengehalt zwischen 27 % und 36 %,
- das B₄C-Pulver in einem Massengehalt zwischen 11,5 % und 21 % und
- das Pulver der Titan enthaltenden Verbindung in einem Massengehalt zwischen 8 % und 18 %.

9. Verfahren nach Anspruch 8, **dadurch gekennzeichnet, dass** die Beschichtungszusammensetzung vor Schritt a) umfasst:
- Aluminiumphosphat in einem Massengehalt zwischen 27 % und 36 %,
- das B₄C-Pulver in einem Massengehalt zwischen 11,5 % und 21 %,
- das Pulver der Titan enthaltenden Verbindung in einem Massengehalt zwischen 8 % und 18 %,
- ein alkoxyliertes Acetylen-Polyol in einem Massengehalt zwischen 0,1 % und 1,5 % und
- Wasser in einem Massengehalt zwischen 33 % und 50 %.

10. Verfahren nach einem der Ansprüche 1 bis 9, **dadurch gekennzeichnet, dass** wenigstens eine innere Schutzschicht vor Schritt a) durch Imprägnieren wenigstens eines Teils des Verbundwerkstoffteils mit einer ein Metallphosphat umfassenden Imprägnierungszusammensetzung ausgebildet wird.

11. Verfahren nach Anspruch 10, **dadurch gekennzeichnet, dass** die Imprägnierungszusammensetzung ein Aluminiumphosphat umfasst.

12. Verfahren nach einem der Ansprüche 1 bis 11, **dadurch gekennzeichnet, dass** die Behandlungstemperatur während der Wärmebehandlung für eine Dauer von mehr als oder gleich 1 Stunde auferlegt wird.

13. Beschichtungszusammensetzung in Form einer wässrigen Suspension, umfassend:
- ein Metallphosphat
- ein Pulver einer Titan enthaltenden Verbindung und
- ein B₄C-Pulver.

14. Zusammensetzung nach Anspruch 13, **dadurch gekennzeichnet, dass** sie umfasst:
- das Metallphosphat in einem Massengehalt zwischen 27 % und 36 %,
- das B₄C-Pulver in einem Massengehalt zwischen 11,5 % und 21 % und
- das Pulver der Titan enthaltenden Verbindung in einem Massengehalt zwischen 8 % und 18 %.

15. Zusammensetzung nach Anspruch 14, **dadurch gekennzeichnet, dass** sie umfasst:
- Aluminiumphosphat in einem Massengehalt zwischen 27 % und 36 %,
- das B₄C-Pulver in einem Massengehalt zwischen 11,5 % und 21 %,
- das Pulver der Titan enthaltenden Verbindung in einem Massengehalt zwischen 8 % und 18 %,
- ein alkoxyliertes Acetylen-Polyol in einem Massengehalt zwischen 0,1 % und 1,5 % und
- Wasser in einem Massengehalt zwischen 33 % und 50 %.

## Claims

1. A method of protecting a part made of carbon-including composite material against oxidation, the method comprising the following steps:
a) applying a coating composition on at least a portion of the outside surface of the part, the coating composition being in the form of an aqueous suspension comprising:
· a metallic phosphate;
· a powder of a compound comprising titanium; and
· a B₄C powder; and
b) applying heat treatment to the coating composition applied during step a) with a treatment temperature lying in the range 330°C to 730°C being imposed during the heat treatment in order to obtain a coating on the outside surface of the part, the coating comprising a first phase in which the metallic phosphate is in crystalline form and a second phase in which the metallic phosphate is in amorphous form.

2. A method according to claim 1, **characterized in that** the coating composition also comprises an organic dispersing agent.

3. A method according to claim 2, **characterized in that** the organic dispersing agent is an alkoxylated acetylenic polyol.

4. A method according to any one of claims 1 to 3, **characterized in that** the titanium-comprising compound is selected from: titanium metal, titanium diboride, titanium carbide, titanium dioxide, and mixtures thereof.

5. A method according to claim 4, **characterized in that** the coating composition includes a powder of titanium metal and/or a powder of titanium diboride.

6. A method according to any one of claims 1 to 5, **characterized in that** the coating composition includes an aluminum phosphate.

7. A method according to any one of claims 1 to 6, **characterized in that** the coating composition further includes a self-healing vitreous compound.

8. A method according to any one of claims 1 to 7, **characterized in that** the coating composition comprises, before step a):
· the metallic phosphate at a content by weight lying in the range 27% to 36%;
· the B₄C powder at a content by weight lying in the range 11.5% to 21%; and
· the powder of the titanium-comprising compound at a content by weight lying in the range 8% to 18%.

9. A method according to claim 8, **characterized in that** the coating composition comprises, before step a) :
· aluminum phosphate at a content by weight lying in the range 27% to 36%;
· the B₄C powder at a content by weight lying in the range 11.5% to 21%;
· the powder of the titanium-comprising compound at a content by weight lying in the range 8% to 18%;
· an alkoxylated acetylenic polyol at a content by weight lying in the range 0.1% to 1.5%; and
· water at a content by weight lying in the range 33% to 50%.

10. A method according to any one of claims 1 to 9, **characterized in that** at least one internal protection layer is formed before step a) by impregnating at least a portion of the part made of composite material with an impregnation composition including a metallic phosphate.

11. A method according to claim 10, **characterized in that** the impregnation composition comprises aluminum phosphate.

12. A method according to any one of claims 1 to 11, **characterized in that** the treatment temperature is imposed during the heat treatment for a duration greater than or equal to 1 hour.

13. A coating composition in the form of an aqueous suspension comprising:
· a metallic phosphate;
· a powder of a compound comprising titanium; and
· a B₄C powder.

14. A composition according to claim 13, **characterized in that** it comprises:
· the metallic phosphate at a content by weight lying in the range 27% to 36%;
· the B₄C powder at a content by weight lying in the range 11.5% to 21%; and
· the powder of the titanium-comprising compound at a content by weight lying in the range 8% to 18%.

15. A composition according to claim 14, **characterized in that** it comprises:
· aluminum phosphate at a content by weight lying in the range 27% to 36%;
· the B₄C powder at a content by weight lying in the range 11.5% to 21%;
· the powder of the titanium-comprising compound at a content by weight lying in the range 8% to 18%;
· an alkoxylated acetylenic polyol at a content by weight lying in the range 0.1% to 1.5%; and
· water at a content by weight lying in the range 33% to 50%.
